# EUROPÄISCHE PATENTSCHRIFT

(11) **EP 0 903 507 B1**
(45) Veröffentlichungstag und Bekanntmachung des Hinweises auf die Patenterteilung: **09.07.2003**
(21) Anmeldenummer: 98116482.5
(22) Anmeldetag: 01.09.1998
(51) Int. Cl.: F16B 19/10

(54) **Dornbruchblindniet und Vorrichtung zum Setzen desselben**
Snap-shank blind rivet and device for setting the same
Rivet aveugle comportant une tige de rupture et appareil de pose

(30) Priorität: 22.09.1997 DE 29716899 U
(43) Veröffentlichungstag der Anmeldung: 24.03.1999
(73) Patentinhaber: AVDEL VERBINDUNGSELEMENTE GmbH, D-30851 Langenhagen (DE)
(72) Erfinder: Gand, Andreas, 30827 Garbsen (DE)
(74) Vertreter: Beck, Alexander, Dipl.-Ing.

(56) Entgegenhaltungen:
- EP-A- 0 168 355
- DE-A- 2 342 203
- FR-A- 1 586 400

## Beschreibung

Die vorliegende Erfindung betrifft einen Dornbruchblindniet und eine Vorrichtung zu seiner Verarbeitung.

Die am Markt befindlichen Dornbruchblindniete bestehen üblicherweise aus einer Hülse mit einem Setzkopf, der auf der dem Setzwerkzeug zugewandten Seite der Werkstücke eingesetzt wird, wobei von der künftigen Blindseite her ein Dorn in die Hülse eingeschoben ist, dessen Kopf etwa den Durchmesser des Außendurchmessers der Hülse erreicht. Beim Setzen wird der Niet in eine Öffnung, die durch beide zu verbindende Werkstücke durchläuft, eingesetzt, bis der Setzkopf an dem vorderseitigen Werkstück anliegt. Sodann wird an dem Dorn gezogen, wodurch sich hinter den zu verbindenden Werkstücken ein sogenannter Blind- oder Schließkopf bildet.

Diese Dornbruchblindniete gemäß dem Stand der Technik haben nun bedauerlicherweise lediglich einen sehr beschränkten Klemmbereich. Das heißt, es können mit einem solchen Dornbruchblindniet einer bestimmten Größe nur Werkstücke mit einem relativ geringen Unterschied in ihrer Gesamtdicke verbunden werden. Außerdem sind die Hülsen für die Dornbruchblindniete gemäß dem Stand der Technik relativ aufwendig herzustellen, da jeweils der Setzkopf erzeugt werden muß. Hinzu kommt, daß bei konventionellen Dornbruchblindnieten die zu verbindenden Werkstücke bereits vor Beginn des Nietvorgangs eng zusammengepreßt sein müssen.

Es ist daher Aufgabe der Erfindung, einen Dornbruchblindniet mit einem größeren Klemmbereich zu schaffen, wobei vorzugsweise auch noch erreicht werden soll, daß die Hülse des Niets einfacher hergestellt werden kann, und auch Werkstücke verbunden werden können, die vor dem Nietvorgang noch nicht direkt aneinander liegen und durch den Nietvorgang zusammengepreßt werden.

Erfindungsgemäß wird diese Aufgabe dadurch gelöst, daß die Hülse vor Beginn des Setzvorgangs einen Außendurchmesser aufweist, der überall geringer ist, als der Innendurchmesser des Loches, in das der Dornbruchblindniet gesetzt wird. Auf diese Weise wird erfindungsgemäß ein setzkopfloser Blindniet geschaffen. Erst beim Setzen des Blindniets bilden sich erfindungsgemäß an beiden Enden der Hülse des Blindniets Schließköpfe. Dies hat den Vorteil, daß die Herstellung der entsprechenden Hülsen erheblich einfacher ist (diese bestehen im Wesentlichen nur noch aus einem durchlaufenden Röhrchen), und bei Verwendung einer geeigneten Verarbeitungsvorrichtung können die Werkstücke auch dann vernietet werden, wenn sie vor dem Nietvorgang noch voneinander beabstandet sind, und erst durch den Nietvorgang zusammengezogen werden.

Um eine ausgesprochen gute Ausbildung der Schließköpfe zu erreichen, ist bei einer besonders bevorzugten Ausführungsform nach der Erfindung vorgesehen, daß die Hülse beiderseits eines mittleren Abschnittes mit Bereichen versehen ist, in denen die Hülse leichter verformbar ist als in dem mittleren Abschnitt.

Die axiale Länge des mittleren Abschnittes entspricht hierbei dem minimalen Klemmbereich des Dornbruchblindniets.

Derartige, leichter verformbare Bereiche können dadurch gebildet werden, daß die Hülse an beiden Enden konisch auslaufend ausgebildet ist.

Hierbei ist es ferner noch bevorzugt, den mittleren Abschnitt durch zwei umlaufende Sicken zu begrenzen, deren Abstand dem minimalen Klemmbereich entspricht. Auch hierdurch wird die Ausbildung der Schließköpfe verbessert.

Bei einer abgewandelten Ausführungsform nach der Erfindung können in besonders vorteilhafter Weise die leichter verformbaren Bereiche durch Gefügeänderung des Materials der Hülse gebildet werden. Dies bietet den besonderen Vorteil, daß lediglich eine Gefügeumwandlung in begrenzten Bereichen beiderseits des mittleren Abschnittes durchgeführt werden muß, so daß eine sonstige Bearbeitung der Hülse unterbleiben kann, so daß diese glatt und mit parallelen Außenwandungen hergestellt werden kann, wodurch der Herstellungsprozeß sicher nochmals erheblich vereinfacht wird.

Zur Gefügeumwandlung können in vorteilhafter Weise die leichter verformbaren Bereiche durch Induktionsglühen entsprechender Bereiche der Hülse ausgebildet sein oder anstelle dessen kann Laserglühen angewandt werden.

Bei einer vorteilhaften Weiterbildung nach der Erfindung ist vorgesehen, daß in dem mittleren Abschnitt ein die Wandstärke der Hülse vergrößernder Abschnitt mit kleinerem Innendurchmesser vorgesehen ist, welcher dem Durchmesser des Dorns entspricht, und daß der Dorn einen an seinen Kopf anschließenden Dornabschnitt mit größerem Durchmesser aufweist, wobei am Übergang zwischen dem Dornabschnitt mit größerem Durchmesser und dem übrigen Dorn eine Sicke vorgesehen ist. Hierdurch wird der Vorteil erzielt, daß der schwerer verformbare mittlere Abschnitt einerseits noch klarer definiert wird, und daß andererseits nach dem Setzen der im Dornbruchblindniet verbleibende Teil des Dorns sicher verriegelt wird, indem durch den Dornabschnitt mit größerem Durchmesser beim Setzen des Niets Material aus dem die Wandstärke vergrößernden Abschnitt in die Sicke verdrängt wird.

Erfindungsgemäß wird ferner eine Vorrichtung zum Setzen von Dornbruchblindnieten mit den oben beschriebenen Merkmalen vorgeschlagen, welche ein das Ende des Dorns in einer Greifvorrichtung aufnehmendes Mundstück aufweist, mittels dessen der Dorn gegenüber einem in dem Mundstück enthaltenen Gegenhalter für die Hülse in Richtung der Werkstücksvorderseite ziehbar ist. Erfindungsgemäß wird hierbei vorgeschlagen, daß das Mundstück von einer Werkstückandruckvorrichtung umgeben ist, daß die Werkstückandruckvorrichtung gegenüber dem Mundstück relativbeweglich ist, und daß mittels der Werkstückandruckvorrichtung eine Kraft auf die Vorderseite des Werkstücks ausübbar ist. Durch diese Vorrichtung wird erreicht, daß bei entsprechender Größe der auf die Vorderseite des Werkstücks ausübbaren Kraft zunächst der Schließkopf auf der Blindseite gebildet wird, während gleichzeitig das blindseitige Werkstück an das vorderseitige Werkstück herangezogen wird, falls die beiden Werkstücke vor dem Nietvorgang noch nicht direkt aneinander anliegend waren. Nach Abschluß der Ausbildung des blindseitigen Schließkopfes und der möglicherweise erfolgenden Bewegung des blindseitigen Werkstücks übersteigt die durch die Greifvorrichtung ausgeübte Kraft die auf die Vorderseite des Werkstücks durch die Werkstückandruckvorrichtung ausgeübte Kraft, so daß anschließend der Schließkopf gebildet wird.

Konstruktiv besonders bevorzugt ist es dabei, daß das Mundstück außen eine zylindrische Form aufweist und von der Werkstückandruckvorrichtung koaxial umgeben ist.

Bei einer Ausführungsform der Vorrichtung nach der Erfindung ist die Werkstückandruckvorrichtung gesteuert gegen die Vorderseite des Werkstücks hin verschiebbar und bis auf die Höhe des Mundstücks zurückziehbar angeordnet. Um einen Dornbruchblindniet mit der Vorrichtung in dieser Ausführungsform zu setzen, wird die Andruckvorrichtung zunächst ausgefahren, so daß das Werkstück an dieser anliegt und anschließend der Dorn durch die Greifeinrichtung gezogen. Die Andruckvorrichtung entlastet hierbei das vorderseitige Ende der Hülse, so daß sich zunächst der blindseitige Schließkopf bildet und anschließend das blindseitige Werkstück an das vorderseitige Werkstück herangezogen wird. Danach wird die Werkstückandruckvorrichtung langsam in Richtung auf das Mundstück zurückgezogen, so daß der Gegenhalter des Mundstücks zunehmend Druck auf die Hülse des Dornbruchblindniets ausübt, wodurch dann der vorderseitige Schließkopf gebildet wird.

Bei alternativen Ausführungsformen der erfindungsgemäßen Vorrichtung besteht die Werkstückandruckvorrichtung aus einem gegen die Werkstückvorderseite drückenden, elastisch nachgiebigen Bauteil, dessen Anpreßkraft derart gewählt ist, daß entsprechend dem Verformungswiderstand der Hülsenenden zunächst der blindseitige Schließkopf und anschließend erst der vorderseitige Schließkopf gebildet wird.

Bei diesen Ausführungsformen kann die Werkstückandruckvorrichtung durch einen elastischen Körper aus Gummi, Hartgummi od. dgl. gebildet sein, oder durch eine Tellerfeder oder Spiralfeder in Richtung der Werkstückvorderseite vorgespannt sein.

Die vorliegende Erfindung wird im folgenden anhand des in der Zeichnung dargestellten Ausführungsbeispiels näher erläutert.

Es zeigen:
**Figur 1** eine erste Ausführungsform des erfindungsgemäßen Dornbruchblindniets im unverarbeiteten Zustand;
**Figur 2** den erfindungsgemäßen Dornbruchblindniet gemäß Figur 1 während des Setzens mittels einer erfindungsgemäßen Setzvorrichtung, wobei beide Schließköpfe gleichzeitig ausgebildet werden;
**Figur 3** den erfindungsgemäßen Dornbruchblindniet gemäß Figur 1 während des Setzvorgangs, wobei zwei vor dem Setzen noch voneinander beabstandete Werkstücke verarbeitet werden (dabei wird zuerst der blindseitige Schließkopf ausgebildet);
**Figur 4** den erfindungsgemäßen Dornbruchblindniet gemäß Figur 1 nach Abschluß des Setzvorgangs;
**Figur 5** eine zweite Ausführungsform eines erfindungsgemäßen Dornbruchblindniets im unverarbeiteten Zustand;
**Figur 6** den Dornbruchblindniet gemäß Figur 5 im vollständig gesetzten Zustand;
**Figur 7** eine weitere dritte Ausführungsform eines erfindungsgemäßen Dornbruchblindniets im unverarbeiteten Zustand;
**Figur 8** den Dornbruchblindniet gemäß Figur 7 im vollständig gsetzten Zustand;
**Figur 9** eine schematische Schnittdarstellung einer ersten Ausführungsform der erfindungsgemäßen Vorrichtung vor Beginn des Setzvorgangs;
**Figur 10** die Vorrichtung gemäß Figur 9 nach Abschluß des Setzvorgangs;
**Figur 11** eine Figur 10 entsprechende Ansicht einer zweiten Ausführungsform der erfindungsgemäßen Vorrichtung, und
**Figur 12** eine Figur 10 entsprechende Ansicht einer dritten Ausführungsform der erfindungsgemäßen Vorrichtung.

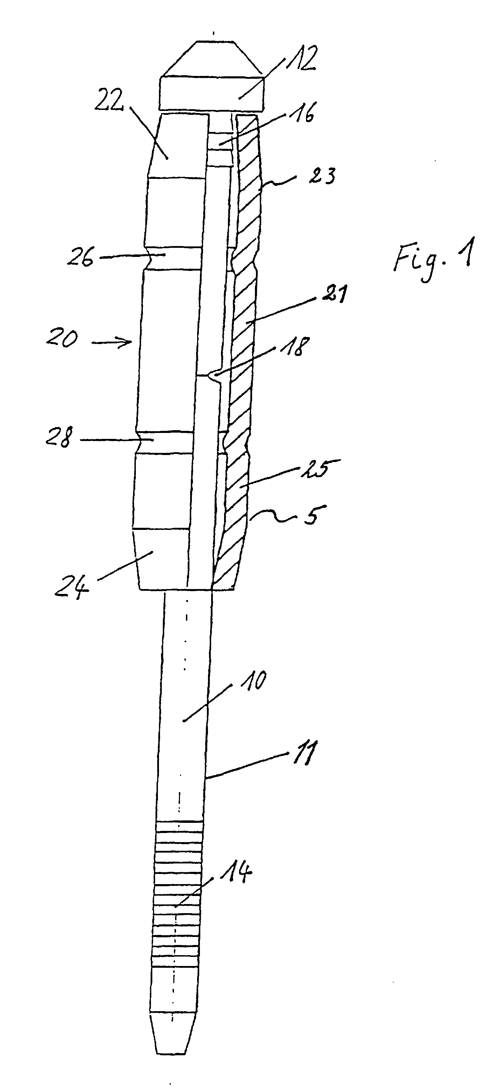

Wie in Figur 1 dargestellt, besteht ein erfindungsgemäßes Dornbruchblindniet 5 aus einem üblichen Dorn 10, der wie üblich an seinem blindseitigen Ende einen Kopf 12 aufweist. Der Dorn weist auch wie üblich Riefen 14 für den Angriff der Zugvorrichtung, Hinterschneidungen 16 zur Fixierung des nach dem Nieten im Niet verbleibenden Rests des Dorns am blindseitigen Schließkopf und eine umlaufende Nut 18 zur Bildung der Sollbruchsteile zum Abreißen des Dorns nach dem Setzen des Niets auf.

Wesentlichen Bestandteil der Erfindung bildet die Ausbildung der Hülse 20. Diese Hülse 20 weist nirgends einen größeren Durchmesser auf, als die Bohrung 4 in den Werkstücken 1 und 2, in der das Niet zu verarbeiten ist. Es ist also kein Setzkopf vorgesehen. Vielmehr ist der Aufbau der Hülse blindseitig und vorderseitig im wesentlichen symmetrisch. Die beiden Enden 22, 24 der Hülse sind jeweils konisch nach außen zulaufend ausgebildet. Auf beiden Seiten eines mittleren Abschnitts 21 der Hülse 20 sind zwei Sicken 26, 28 vorgesehen, deren Abstand dem minimalen Klemmbereich des erfindungsgemäßen Dornbruchblindniets entspricht. Ansonsten entspricht die Form der Hülse 20 im wesentlichen einem Hohlzylinder bzw. einem Röhrchen. Die Kombination der konischen Enden 22, 24 mit den Sicken 26, 28 bildet beiderseits des mittleren Abschnitts 21 Bereiche 23, 25, in denen die Hülse 20 leichter verformbar ist als im mittleren Abschnitt 21.

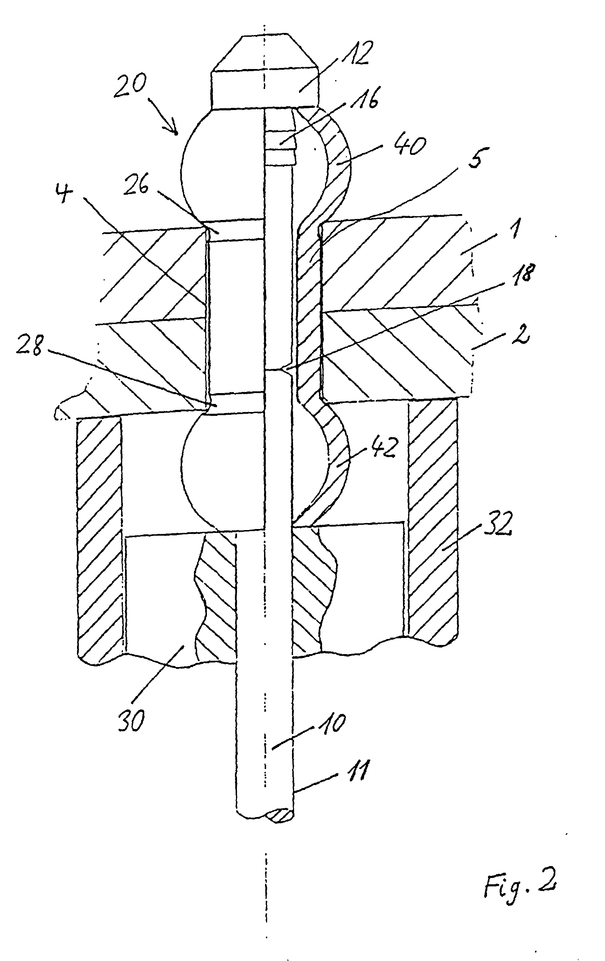

Figur 2 zeigt einen erfindungsgemäßen Dornbruchblindniet während des normalen Setzvorgangs, der zur Anwendung kommt, wenn die zu verbindenden Werkstücke bereits vor dem Nietvorgang eng aneinander liegen und es auf die optimale Ausnutzung des möglichen Klemmbereichs des Niets ankommt.

Hierbei kommt eine besondere erfindungsgemäße Vorrichtung zur Verarbeitung dieser erfindungsgemäßen Dornbruchblindniete zur Anwendung, wie sie weiter unten in mehreren Ausführungsformen näher beschrieben ist. Bei dieser Vorrichtung ist das Mundstück 30, welches im wesentlichen zylindrisch ausgebildet ist, von einer koaxialen Werkstückandruckvorrichtung 32 umgeben. Diese weist im wesentlichen ein zylindrisches Gehäuse 44 in Form eines Rohres auf, welches auf das Mundstück 30 aufgesteckt ist. Bei der Ausführungsform der Vorrichtung gemäß Figuren 2 bis 4 ist die Werkstückandruckvorrichtung 32 gesteuert gegenüber dem Mundstück 30 verschiebbar.

Bei dem in Fig. 2 dargestellten Setzvorgang wird nun die Werkstückandruckvorrichtung 32 vor Beginn des Setzens ganz nach vorne geschoben. Die Verarbeitungsvorrichtung nimmt dann den Dornbruchblindniet in üblicher Weise im Mundstück auf, der Dornbruchblindniet wird in das Loch 4 in den zu verbindenden Werkstücken 1 und 2 eingesetzt und sodann wird an dem Stiel 11 des Dornes 10 gezogen, während gleichzeitig die Werkstückandruckvorrichtung 32 langsam nach hinten fährt, so daß das Mundstück 30 auf die zu verbindenden Werkstücke zufährt. Auf diese Weise bilden sich gleichzeitig der blindseitige Schließkopf 40 und der Vorderseitige Schließkopf 42. Der Klemmbereich kann hierbei erheblich vergrößert werden, da durch zwei Schließköpfe, deren Größe abhängig von dem Klemmbereich angepaßt werden kann, ein etwa doppelt so großer Klemmbereich zur Verfügung steht. Bei maximaler Dicke der zu verbindenden Werkstücke werden beide Schließköpfe minimal klein, während bei minimalem Klemmbereich beide Schließköpfe ihre maximale Größe erreichen.

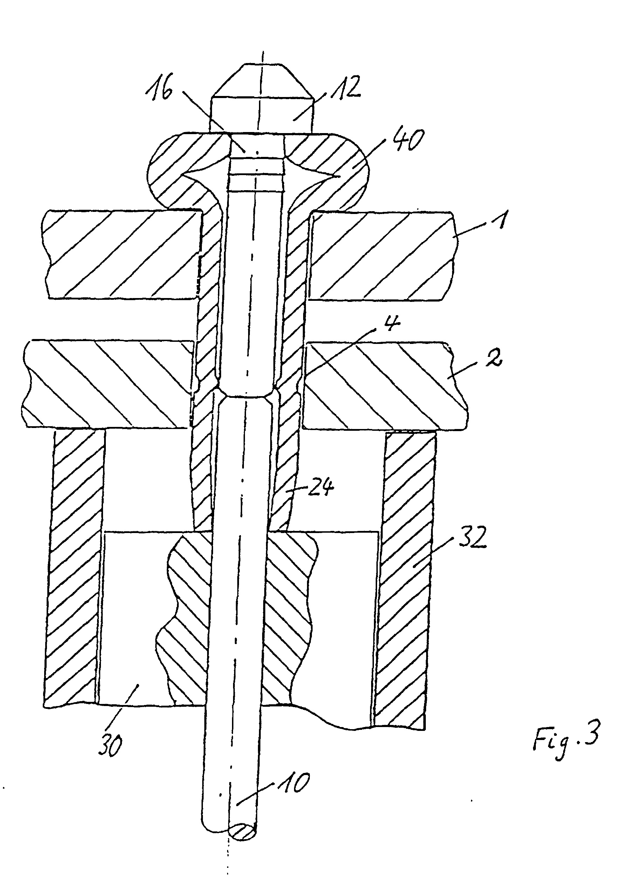

Die Fig. 3 zeigt eine besondere Anwendung des erfindungsgemäßen Blindniets in Verbindung mit der erfindungsgemäßen Verarbeitungsvorrichtung, wobei die Verbindung zweier Werkstücke mittels eines Blindniets möglich wird, auch wenn diese Werkstücke vor dem Verbinden noch nicht direkt aneinander liegen. Der Arbeitsablauf ist hier folgender: Vor Beginn der Verarbeitung wird, wie oben bei Fig. 2 beschrieben, der erfindungsgemäße Dornbruchblindniet 5 ebenfalls in das Mundstück 30 eingesetzt, und die Werkstückandruckvorrichtung 32 ganz nach vorne gefahren. Das Dornbruchblindniet 5 wird in die Öffnung 4 der beiden Werkstücke 1 und 2 eingesetzt. Sodann wird zwar ebenfalls an dem Dorn 10 gezogen, diesmal bleibt die Werkstückandruckvorrichtung 32 jedoch ganz ausgefahren, so daß die entstehende Zugkraft nicht über das Mundstück 30 auf das vorderseitige Ende 24 der Hülse 20 des Niets wirkt, sondern ausschließlich über die Werkstückandruckvorrichtung 32 auf die Werkstücke. Dadurch wird erreicht, daß sich zum einen der blindseitige Schließkopf 40 zuerst ausbildet, und zum anderen gleichzeitig damit die beiden Werkstücke 1 und 2 fest aneinandergepreßt werden. Erst nach dem Erreichen einer für die Ausbildung des blindseitigen Schließkopfes 40 und für das Aneinanderpreßen der Werkstücke 1 und 2 ausreichenden Druckes wird die Werkstückandruckvorrichtung 32 zurückgefahren oder weicht zurück. Wie weiter unten näher erläutert, kann zum Beispiel die Werkstückandruckvorrichtung 32 einfach über eine entsprechende starke Feder beaufschlagt sein. Erst dann wird durch die zunehmende Annäherung des Mundstücks 30 an die zu verbindenden Werkstücke der vorderseitige Schließkopf 42 ausgebildet.

In den Figuren 5 bis 8 sind zwei weitere, besonders bevorzugte Ausführungsformen des Dornbruchblindniets nach der vorliegenden Erfindung gezeigt, wobei für gleiche bzw. gleichwirkende Teile gleiche Bezugszeichen verwendet wurden.

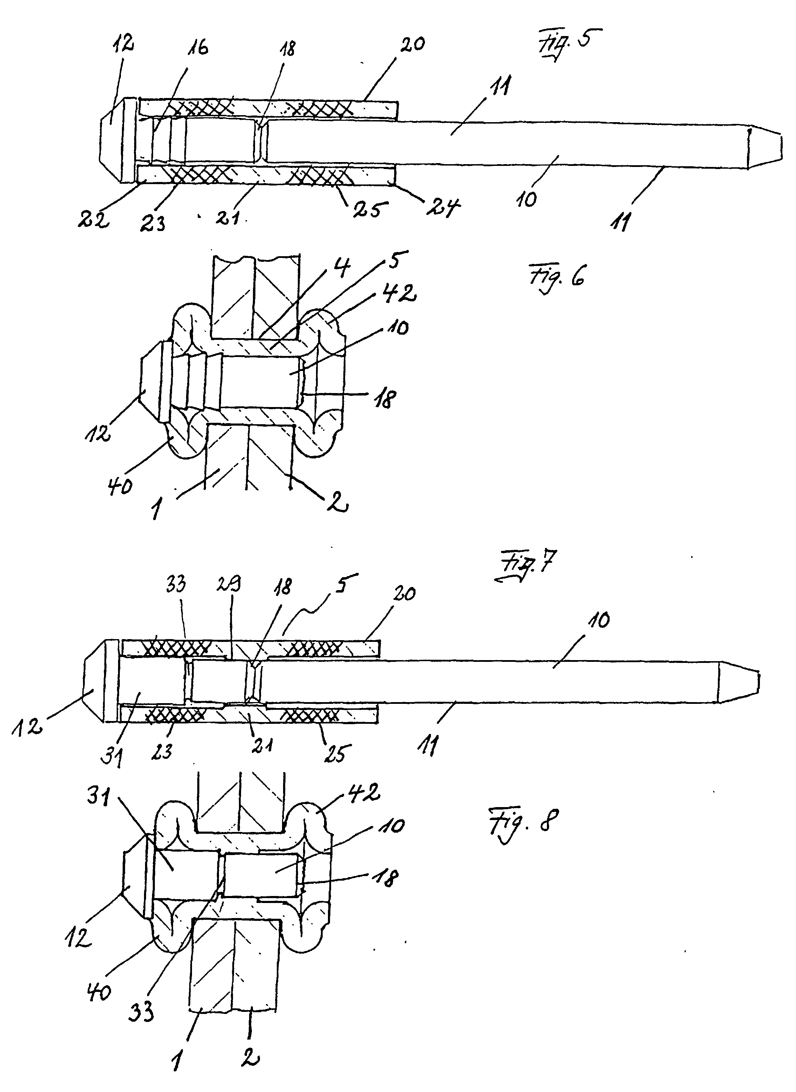

Figur 5 und 6 zeigt eine der beiden Ausführungsformen einmal im unverarbeiteten und einmal im vollständig gesetzten Zustand. Wie gezeigt, ist bei dieser Ausführungsform die Hülse 20 glatt, d.h. ohne konische Enden und zusätzliche äußere Sicken, ausgebildet. Beiderseits des mittleren Abschnittes 21 der Hülse 20 sind hierbei die leichter verformbaren Bereiche 23 und 25 dadurch ausgebildet, daß das Gefüge des Materials der Hülse 20 in diesen Bereichen geändert wurde, was beispielsweise durch Induktionsglühen oder Laserglühen geschehen kann. Die Enden 22 und 24 selbst der Hülse sind bevorzugt diesen Gefügeänderungen nicht ausgesetzt, so daß sie saubere Anlageflächen des Kopfes 12 des Dornes 10 bzw. des weiter unten beschriebenen Gegenhalters des Mundstückes 30 bilden.

Figur 6 zeigt den Dornbruchblindniet gemäß Figur 5 im vollständig gesetzten Zustand, wobei dieser dann sich durch eine Bohrung 4 in den Werkstücken 1 und 2 erstreckt und einen blindseitigen Schließkopf 40 unter dem Kopf 12 des Dornes 10 und einen Schließkopf 42 auf der Vorderseite der Werkstücke 1 und 2 gebildet hat. Gleichzeitig ist der Stiel 11 des Dorns 10 an der die Sollbruchstelle bildenden Nut 18 abgerissen. Durch die Hinterschneidungen 16 ist der in den Blindniet 5 verbleibende Rest des Dornes 10 sicher verankert.

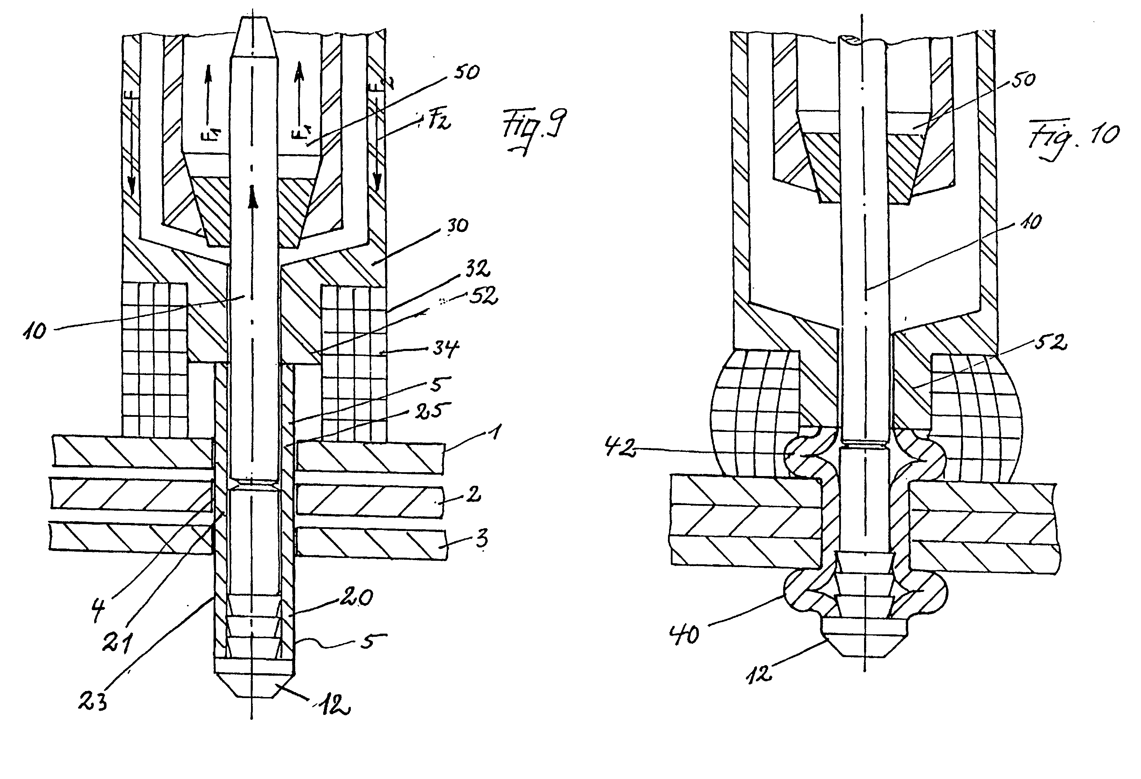

Bei der Ausbildungsform gemäß den Figuren 7 und 8 entspricht die Hülse 20 im wesentlichen der Ausführungsform gemäß den Figuren 5 und 6, indem auch hier die leichter verformbaren Bereiche 23, 25 beidseitig des mittleren Abschnitts 21 durch Gefügeänderung des Materials der Hülse gebildet wurden. Zusätzlich ist bei dieser Ausführungsform des Dornbruchblindniets nach der Erfindung in dem mittleren Abschnitt 21 die Wandstärke der Hülse 20 geringfügig verstärkt, indem ein Abschnitt 29 mit kleinerem Innendurchmesser vorgesehen ist, der dem Durchmesser des Dorns 10 entspricht. Der Dorn 10 weist in einem an seinen Kopf anschließenden Dornabschnitt 31 einen geringfügig größeren Durchmesser als der Rest des Dornes auf, wobei am Übergang zwischen dem Dornabschnitt 31 mit geringfügig größerem Durchmesser zu dem übrigen Dorn eine Sicke 33 vorgesehen ist. Diese Art der Ausbildung dient dazu, den in dem Blindniet verbleibenden Dornabschnitt sicher in der Hülse 20 nach dem Setzen zu verankern. Der vollständig gesetzte Zustand des Blindniets in der Ausführungsform gemäß Figur 7 ist in Figur 8 gezeigt. Wie dargestellt, hat der Abschnitt 31 des Dornes 10 mit vergrößertem Durchmesser das die Wandstärke der Hülse 20 im Abschnitt 29 vergrößernde Material in die Sicke 33 hineinverformt, so daß hierdurch ein positiver Formschluß zwischen dem abgerissenen, in der Hülse 20 verbleibenden Abschnitt des Dornes 10 und der Hülse 20 selbst erzeugt wurde.

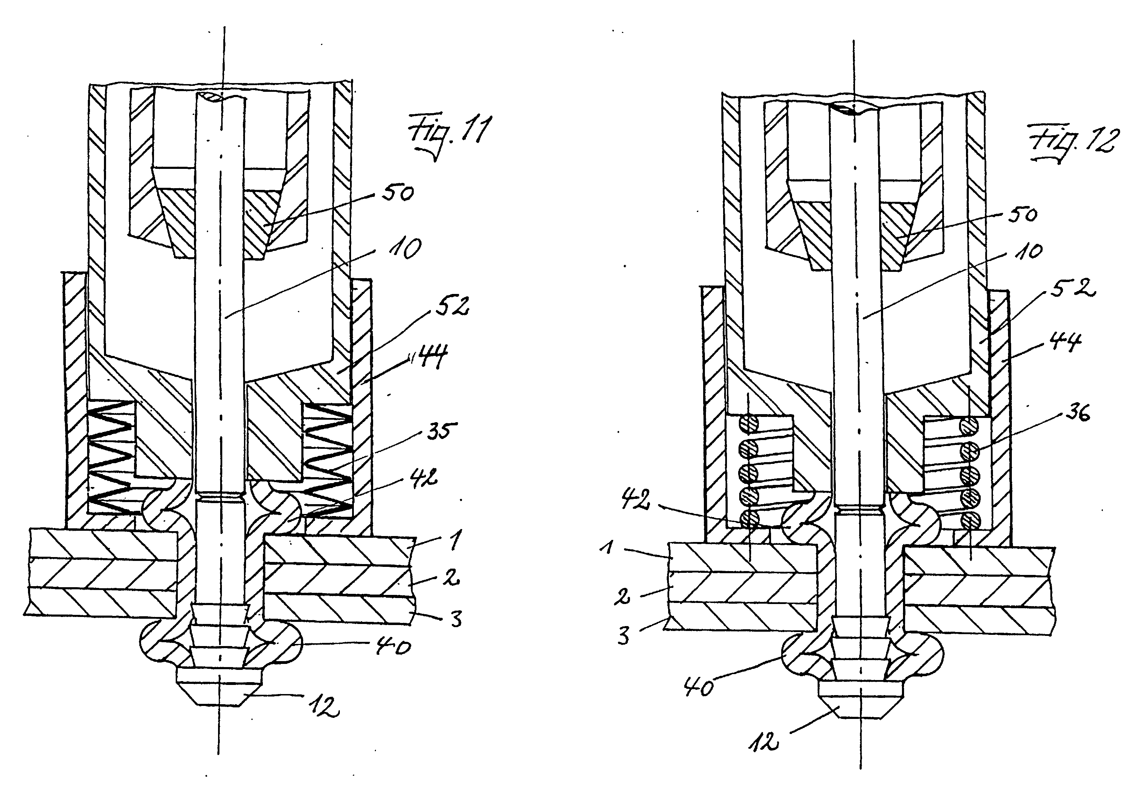

In den Figuren 9 und 10 ist schematisch in entsprechenden Schnittansichten eine weitere Ausführungsform der erfindungsgemäßen Vorrichtung zum Setzen der Dornbruchblindnieten nach der Erfindung veranschaulicht. Figur 9 zeigt hierbei den Beginn des Setzvorganges, während Figur 10 das Ende des Setzvorganges kurz vor dem Abreissen des Dornes 10 zeigt.

Bei der Ausführungsform der Vorrichtung gemäß den Figuren 9 und 10 besteht die Werkstückandruckvorrichtung aus einem, das Mundstück 30 umgebenden elastischen, zylindrischen Körper 34 aus Gummi, Hartgummi, Kunststoff od. dgl.. Am Beginn des Setzvorganges, wie er in Figur 9 dargestellt ist, ist der Dorn 10 durch eine Greifeinrichtung 50 des Mundstücks 30 gehalten, wobei ein Gegenhalter 52 sich gegen das vorderseitige Ende der Hülse 20 abstützt. Der Blindniet 5 ist durch die miteinander fluchtenden Bohrungen 4 von drei miteinander zu verbindenden Werkstücken 1, 2, 3 in Spielpassung hindurchgeführt, wobei zwischen den Werkstücken 1, 2 und 3 beim Beginn des Setzvorganges Abstände vorhanden sind, wie dies in Figur 9 dargestellt ist. Durch die Greifeinrichtung 50 wird nun eine Zugkraft F1 auf den Dorn 10 ausgeübt, wobei die Reaktionskräfte F2 durch den Gegenhalter 52 aufgenommen werden. Bei Ansteigen der Zugkraft F1 wird zunächst der Schließkopf 40 auf der Blindseite der Werkstücke 1, 2, 3 ausgebildet. Bis zur Ausbildung des Schließkopfes 40 auf der Blindseite der Werkstücke erfolgte keine Bewegung der Hülse 20 gegenüber dem Mundstück 30. Nach Ausbildung des blindseitigen Schließkopfes 40 jedoch wird dieser über den Dorn 10 durch die Greifvorrichtung 40 in Richtung der Vorderseite des Werkstücks 1 gezogen, wobei dieses durch die Werkstückandruckvorrichtung 32, d.h. den elastischen Körper 34, abgestützt ist. Sobald die Werkstücke 1, 2, 3 dicht aneinander liegen, beginnt durch weitere Ausübung der Zugkraft F1 sich der Gegenhalter 52 gegen den Druck des elastischen Körpers 34 in Richtung der Vorderseite des Werkstücks 1 zu bewegen, so daß hierdurch unter dichtem Aneinanderpressen der Werkstücke 1, 2, 3 der Schließkopf 42 auf der Vorderseite gebildet wird. Anschließend reißt der Dorn 10 an der die Sollbruchstelle bildenden Nut 18 ab.

Bei den Ausführungsformen gemäß den Figuren 11 und 12 ist die Werkstückandruckvorrichtung 32 derart ausgebildet, daß anstelle des elastischen Körpers 34 das Mundstück 30 durch ein axial bewegliches, zylindrisches Gehäuse 44 umgeben ist, welches bei der Ausführungsform gemäß Figur 11 durch eine Tellerfeder 35 und bei der Ausführungsform gemäß Figur 12 durch eine Spiralfeder 36 gegenüber dem Gegenhalter 52 in Richtung der Werkstücke 1, 2, 3 vorgespannt ist.

Auf die erfindungsgemäße Weise ist es erstmals möglich, Werkstücke auch dann durch Blindniete zu verbinden, wenn diese Werkstücke vor Beginn des Verbindungsvorgangs noch nicht direkt aneinanderliegen. Bei konventionellen Dornbruchblindnieten kann dies nicht durchgeführt werden, da üblicherweise der verfügbare Klemmbereich bei weitem nicht ausreicht.

Erfindungsgemäß kann also mit dem neu entwickelten Dornbruchblindniet und der zugehörigen Verarbeitungsvorrichtung erstmals durch entsprechende Steuerung der Werkstückandruckvorrichtung bestimmt werden, ob sich zuerst der blindseitige Schließkopf bilden soll, oder ob sich beide Schließköpfe gleichzeitig bilden sollen.

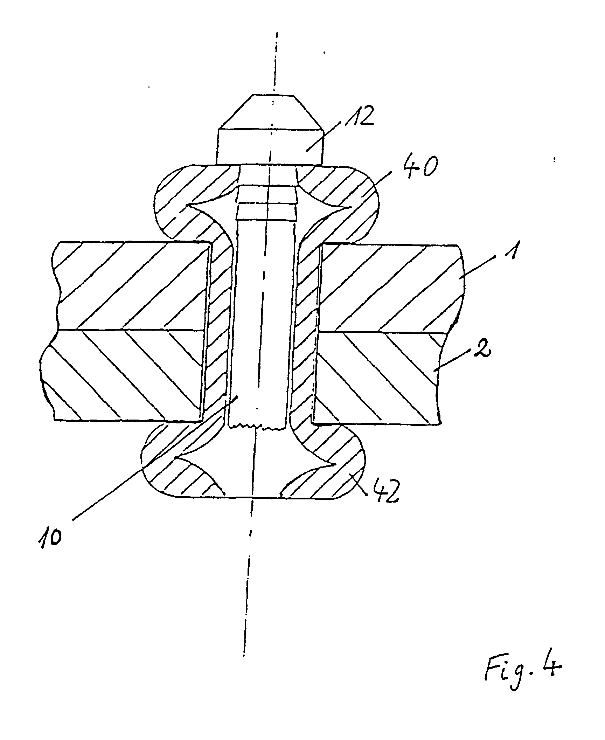

Unabhängig davon, ob die Verarbeitung gemäß der in Fig. 2 oder Fig. 3 bzw. Fig. 9 bis 12 dargestellten Vorgehensweise erfolgt, sieht der erfindungsgemäße Dornbruchblindniet nach der Verarbeitung wie in Fig. 4, 6, 8, 10, 11 und 12 dargestellt aus. Beide Schließköpfe sind voll ausgebildet, der Dorn ist ordnungsgemäß an der Sollbruchstelle 18 abgerissen und sitzt fest in dem blindseitigen Schließkopf 40.

## Patentansprüche

1. Dornbruchblindniet(5) mit einem einen vergrößerten Kopf (12) aufweisenden Dorn (10), welcher in einer Hülse (20) angeordnet ist, **dadurch gekennzeichnet, daß** die Hülse (20) vor Beginn des Setzvorgangs einen Außendurchmesser aufweist, der durchgehend geringer ist als der Innendurchmesser des Loches, in das der Dornbruchblindniet gesetzt wird.

2. Dornbruchblindniet nach Anspruch 1, **dadurch gekennzeichnet, daß** die Hülse (20) beiderseits eines mittleren Abschnitts (21) mit Bereichen (23, 25) versehen ist, in denen die Hülse (20) leichter verformbar ist als in dem mittleren Abschnitt (21).

3. Dornbruchblindniet nach Anspruch 2, **dadurch gekennzeichnet, daß** die axiale Länge des mittleren Abschnitts (21) etwa dem minimialen Klemmbereich des Dornbruchblindniets (5) entspricht.

4. Dornbruchblindniet nach einem der vorstehenden Ansprüche, **dadurch gekennzeichnet, daß** die Bereiche (23, 25) dadurch gebildet sind, daß die Hülse (20) an beiden Enden (22, 24) konisch auslaufend ausgebildet ist.

5. Dornbruchblindniet nach Anspruch 4, **dadurch gekennzeichnet, daß** der mittlere Abschnitt (21) durch zwei umlaufende Sicken (26, 28) begrenzt ist, deren Abstand dem minimalen Klemmbereich entspricht.

6. Dornbruchblindniet nach einem der Ansprüche 1 bis 5, **dadurch gekennzeichnet, daß** die leichter verformbaren Bereiche (23, 25) durch Gefügeänderungen des Materials der Hülse (20) gebildet sind.

7. Dornbruchblindniet nach Anspruch 6, **dadurch gekennzeichnet, daß** die leichter verformbaren Bereiche (23, 25) durch Induktionsglühen entsprechender Bereiche der Hülse (20) gebildet sind.

8. Dornbruchblindniet nach Anspruch 6, **dadurch gekennzeichnet, daß** die leichter verformbaren Bereiche (23, 25) durch Laserglühen entsprechender Bereiche der Hülse (20) gebildet sind.

9. Dornbruchblindniet nach einem der Ansprüche 6 bis 8, **dadurch gekennzeichnet, daß** in dem mittleren Abschnitt (21) ein die Wandstärke der Hülse (20) vergrößernder Abschnitt (29) mit kleinerem Innendurchmesser vorgesehen ist, welcher dem Durchmesser des Dorns (10) entspricht, und daß der Dorn (10) einen an seinen Kopf (12) anschließenden Dornabschnitt (31) mit größerem Durchmesser aufweist, wobei am Übergang zwischen dem Dornabschnitt (31) mit größerem Durchmesser und dem übrigen Dorn (10) eine Sicke (33) vorgesehen ist.

10. Vorrichtung zum Setzen von Dornbruchblindnieten (5) nach einem der vorstehenden Ansprüche, mit einem das Ende des Dorns (10) in einer Greifvorrichtung (50) aufnehmenden Mundstück (30), mittels dessen der Dorn (10) gegenüber einem in dem Mundstück (30) enthaltenen Gegenhalter (52) für die Hülse (20) in Richtung der Werkstückvorderseite ziehbar ist, **dadurch gekennzeichnet, daß** das Mundstück (30) von einer Werkstückandruckvorrichtung (32) umgeben ist, daß die Werkstückandruckvorrichtung (32) gegenüber dem Mundstück (30) relativ beweglich ist, und daß mittels Werkstückandruckvorrichtung (32) eine Kraft auf die Vorderseite des Werkstücks ausübbar ist.

11. Vorrichtung nach Anspruch 10, **dadurch gekennzeichnet, daß** das Mundstück (30) außen eine zylindrische Form aufweist und von der Werkstückandruckvorrichtung (32) koaxial umgeben ist.

12. Vorrichtung Anspruch 10 oder 11, **dadurch gekennzeichnet, daß** die Werkstückandruckvorrichtung (32) gesteuert gegen die Vorderseite des Werkstücks hin verschiebbar und bis auf die Höhe des Mundstücks (30) zurückziehbar angeordnet ist.

13. Vorrichtung nach Anspruch 10 oder 11, **dadurch gekennzeichnet, daß** die Werkstückandruckvorrichtung (32) durch einen elastischen Körper (34) aus Gummi, Hartgummi oder dergleichen, gebildet ist.

14. Vorrichtung nach Anspruch 10 oder 11, **dadurch gekennzeichnet, daß** die Werkstückandruckvorrichtung (32) durch eine Tellerfeder (35) in Richtung der Vorderseite des Werkstücks vorgespannt ist.

15. Vorrichtung nach Anspruch 10 oder 11, **dadurch gekennzeichnet, daß** die Werkstückandruckvorrichtung (32) durch eine Spiralfeder (15) in Richtung der Werkstückvorderseite vorgespannt ist.

## Claims

1. Break-stem blind rivet (5) having a mandrel (10) provided with an enlarged head (12), which is positioned in a shell (20), **characterised in that** the shell (20) before the beginning of the placing procedure is having an exterior diameter, which continuously is smaller than the interior diameter of the hole into which the break-stem blind rivet is placed.

2. Break-stem blind rivet according to claim 1, **characterised in that** the shell (20) on both sides of a central section (21) is provided with sections (23, 25) in which the shell (20) can be deformed more easily compared with the central section (21).

3. Break-stem blind rivet according to claim 2, **characterised in that** the axial length of the central section (21) generally is corresponding to the minimum range of grip of the break-stem blind rivet (5).

4. Break-stem blind rivet according to any of the preceding claims, **characterised in that** the sections (23, 25) are formed by the feature that the shell (20) on both ends is conically chambered.

5. Break-stem blind rivet according to claim 4, **characterised in that** the central section (21) is limited by two circumferential grooves (26, 28), the distance of which is corresponding to the minimal range of grip.

6. Break-stem blind rivet according to any of the claims 1 to 5, **characterised in that** the sections (23, 25), being deformable more easily, are formed by microstructural change of the material of the shell (20).

7. Break-stem blind rivet according to claim 6, **characterised in that** the sections (23, 25), being deformable more easily, are formed by induction annealing of corresponding sections of the shell (20).

8. Break-stem blind rivet according to claim 6, **characterised in that** the sections (23, 25), being deformable more easily, are formed by laser annealing of corresponding sections of the shell (20).

9. Break-stem blind rivet according to any of the claims 6 to 8, **characterised in that** in the central section (21) there is provided a section (29) increasing the wall thickness of the shell (20) having a smaller diameter, which is corresponding to the diameter of the mandrel (10) and that the mandrel (10) at a mandrel section (31) following its head is having a larger diameter, wherein at the transition between the mandrel section (31) with the larger diameter and the remainder of the mandrel (10) there is provided a groove (33).

10. Apparatus for placing break-stem blind rivets (5) according to any of the preceding claims, having a mouth piece (30) receiving the end of the mandrel (10) in a gripping device (50) by the means of which the mandrel (10) can be drawn relative to an anvil (52) for the shell (20) contained in the mouth piece (30) in the direction of the front side of the work piece, **characterised in that** the mouth piece (30) is surrounded by a work piece pressing device (32), that the work piece pressing device (32) is relatively movable with respect to the mouth piece (30) and that by means of the work piece pressing device (32) a force onto the front side of the work piece can be exerted.

11. Apparatus according to claim 10, **characterised in that** the mouth piece (30) externally is having a cylindrical shape and is co-axially surrounded by the work piece pressing device (32).

12. Apparatus according to claim 10 or 11, **characterised in that** the work piece pressing device (32) is reciprocable against the front side of the work piece in a controlled manner and is withdrawable up to the height of the mouth piece (30).

13. Apparatus according to claim 10 or 11, **characterised in that** the work piece pressing device (32) is formed by an elastic body (34) of rubber, hard rubber or the like.

14. Apparatus according to claim 10 or 11, **characterised in that** the work piece pressing device (32) is pre-stressed in the direction of the front side of the work piece by a Belle-ville-spring washer (35).

15. Apparatus according to claim 10 or 11, **characterised in that** the work piece pressing device (32) is pre-stressed in the direction of the front side of the work piece by a coil spring (15).

## Revendications

1. Rivet borgne à rupture de tige (5) avec une tige (10) qui présente une tête (12) agrandie et qui est disposée dans une douille (20), **caractérisé en ce qu'**avant l'opération de pose, la douille (20) présente un diamètre extérieur qui, de bout en bout, est plus petit que le diamètre intérieur du trou dans lequel est posé le rivet borgne à rupture de tige.

2. Rivet borgne à rupture de tige selon la revendication 1, **caractérisé en ce que** la douille (20) est pourvue des deux côtés d'un tronçon central (21) de zones (23, 25) dans lesquelles la douille (20) est plus facilement déformable que dans le tronçon central (21).

3. Rivet borgne à rupture de tige selon la revendication 2, **caractérisé en ce que** la longueur axiale du tronçon central (21) correspond approximativement à la zone minimale de serrage du rivet borgne à rupture de tige (5).

4. Rivet borgne à rupture de tige selon l'une des revendications précédentes, **caractérisé en ce que** les zones (23, 25) sont formées par le fait que la douille (20) se termine coniquement aux deux extrémités (22, 24).

5. Rivet borgne à rupture de tige selon la revendication 4, **caractérisé en ce que** le tronçon central (21) est limité par deux moulures (26, 28) périphériques dont l'écartement correspond à la zone minimale de serrage.

6. Rivet borgne à rupture de tige selon l'une des revendications 1 à 5, **caractérisé en ce que** les zones (23, 25) plus facilement déformables sont formées par des modifications de la structure de la matière de la douille (20).

7. Rivet borgne à rupture de tige selon la revendication 6, **caractérisé en ce que** les zones (23, 25) plus facilement déformables sont formées par recuit à induction des zones correspondantes de la douille (20).

8. Rivet borgne à rupture de tige selon la revendication 6, **caractérisé en ce que** les zones (23, 25) plus facilement déformables sont formées par recuit au laser des zones correspondantes de la douille (20).

9. Rivet borgne à rupture de tige selon l'une des revendications 6 à 8, **caractérisé en ce que** dans le tronçon central (21) est prévu un tronçon (29) qui augmente l'épaisseur de la paroi de la douille (20) et dont le diamètre intérieur plus petit correspond au diamètre de la tige (10), et **en ce que** la tige (10) comporte un tronçon de tige (31) de plus grand diamètre, se raccordant à sa tête (12), une moulure (33) étant prévue à la transition entre le tronçon de tige (31) de plus grand diamètre et le reste de la tige (10).

10. Dispositif pour poser des rivets borgnes à rupture de tige (5) selon l'une des revendications précédentes, comportant un embout (30) qui reçoit l'extrémité de la tige (10) dans un dispositif de prise (50) et au moyen duquel on peut tirer la broche (10) en direction de la face avant de la pièce, par rapport à un contre-rivoir (52) de la douille (20) contenu dans l'embout (30), **caractérisé en ce que** l'embout (30) est entouré par un dispositif de pressage de pièce (32), **en ce que** le dispositif de pressage de pièce (32) est déplaçable par rapport à l'embout (30), et **en ce qu'**une force peut être exercée sur la face avant de la pièce au moyen du dispositif de pressage de pièce (32).

11. Dispositif selon la revendication 10, **caractérisé en ce que** l'embout (30) présente extérieurement une forme cylindrique et est entouré coaxialement par le dispositif de pressage de pièce (32).

12. Dispositif selon la revendication 10 ou 11, **caractérisé en ce que** le dispositif de pressage de pièce (32) est commandé de manière à pouvoir coulisser vers la face avant de la pièce et est disposé de manière à pouvoir être retiré jusqu'à la hauteur de l'embout (30).

13. Dispositif selon la revendication 10 ou 11, **caractérisé en ce que** le dispositif de pressage de pièce (32) est formé par un corps élastique (34) en caoutchouc, caoutchouc dur ou similaire.

14. Dispositif selon la revendication 10 ou 11, **caractérisé en ce que** le dispositif de pressage de pièce (32) est précontraint par un ressort Belleville (35) en direction de la face avant de la pièce.

15. Dispositif selon la revendication 10 ou 11, **caractérisé en ce que** le dispositif de pressage de pièce (32) est précontraint par un ressort spiral (15) en direction de la face avant de la pièce.
